# EUROPEAN PATENT APPLICATION

(11) **EP 2 481 274 A2**
(43) Date of publication of application: **01.08.2012**
(21) Application number: 10818441.7
(22) Date of filing: 22.09.2010
(51) Int. Cl.: A01C 1/04

(54) **SUPPORT OF PLANT ORIGIN (SEGMENT OF MACROPHYTE LEAF) FOR ASSISTANCE WITH SEED GERMINATION AND PLANT GROWTH**

(30) Priority: 22.09.2009 ES 200930716
(71) Applicant: Macrofitas, S.L., 28224 Pozuelo de Alarcón - Madrid (ES)
(72) Inventor: RIESCO PRIETO, Pablo, E-28224 Pozuelo de Alarcón, Madrid (ES); TORRES JUNCO, Vicente Juan, E-28794 Guadalix de la Sierra - Madrid (ES)
(74) Representative: Naranjo Marcos, Maria Antonia
(86) International application number: PCT/ES2010/000387
(87) International publication number: WO 2011/036315

(57) **Abstract**

The invention herein relates to a procedure to assist in the germination, growth and development of seeds or plants, from a support of plant origin especially from macrophyte plants.

A fundamental part of the procedure involves a support of plant origin which consists of a longitudinal segment of the leaf of a macrophyte plant that has been dried, the result being the appearance of a macaroon, having an outer plant coating and an inner circular portion filled with a porous tissue. This procedure described herein involves the use of the support of plant origin described above for the germination of seeds contributing to the growth and feeding of the seed until it becomes a plant, using the segment of macrophyte, said segment having particular characteristics as provider of oxygen and nutrition.

## Description

### Object of the Invention

The invention herein relates to a procedure to assist in the germination, growth and development of seeds or plants from a support of plant origin especially from macrophyte plants or other plants growing in a substrate or plants in an aqueous medium. A fundamental part of the procedure involves a support of plant origin which consists of a longitudinal segment of the leaf of a macrophyte plant that has been dried by a natural or artificial process, the result being the appearance of a macaroon, having an outer plant coating and an inner circular portion filled with a porous tissue. This support can be made from the leaves of the macrophytes collected and dried and then cut into segments, with seeds attached to its structure such that when the seeds germinate, the cut segment acts like the plant stem segments from which its buds sprout. The type of plant used can be leaves of plants preferably such as typhas, bulrushes, rushes and cane for the structure and characteristics thereof.

The procedure described herein involves the use of the support of plant origin described above for the germination of seeds contributing to the growth and feeding of the seed until it becomes a plant, using the segment of macrophyte to which they adhere which forms the support, said segment having particular characteristics as provider of oxygen and nutrition.

### State of the art

The inventor does not know any similar system to the one described herein.

The systems currently used to assist in planting and development of plants, especially crops and growth in an aqueous medium is carried out by incorporating flexible mesh netting of varying thicknesses on the area of the root or seed of the plant. This device is still considered complementary in using the support of plant origin described herein.

Nonetheless, to date no similar synergistic relationship has been achieved in which the result from a plant product is used as a vehicle for oxygenation, nutrition and hydration and to stimulate the growth and protection of seeds and plants as achieved by the support of flexible plant origin described herein.

There are various systems for germinating seeds and plants in their early stage of development, all systems in oxic substrates made of synthetic inorganic materials and in no case can cooperate in the process of growth or oxygenation of the plant/seed. Moreover, the plastic material supports are difficult to recycle when removed or changed; plastics, PVC and derivatives are highly pollutant and take an indeterminate period of time to disintegrate from soil and break down in water, etc.

### Advantages

Thus, the main advantages provided by the procedure described, based on the support of flexible plant origin in relation to the state of the art described above include, but are not limited to, the following;
- The support is environmentally friendly.
- Easy to recycle or reuse.
- Simplicity and efficiency of use.
- No energy consumption (sun + plants), consistent with the Kyoto Protocol. It does not pollute.
- No emission of bad odours and no mud.
- Reduced maintenance of phytosanitary and gardening work.
- Zero environmental impact.
- Reduced maintenance.
- Can be used to grow any type of plant.
- Easily transported in sterile conditions and as such is suitable for export to countries where there are regulatory restrictions in this regard.
- Any type of material with similar characteristics to the plant structure of the macrophytes can be used.
- Improved protection of seed planting, germination.
- Contribution to the extra oxygenation required by the seed or plant during germination and growth.
- Providing extra nutrients for the plant growth/development process.
- As it is of plant origin, due to the characteristics of the plants there is a high degree of flexibility and capacity for deformation and recovery.

### Designs

In order to understand the object of the invention herein the relevant designs are attached wherein;

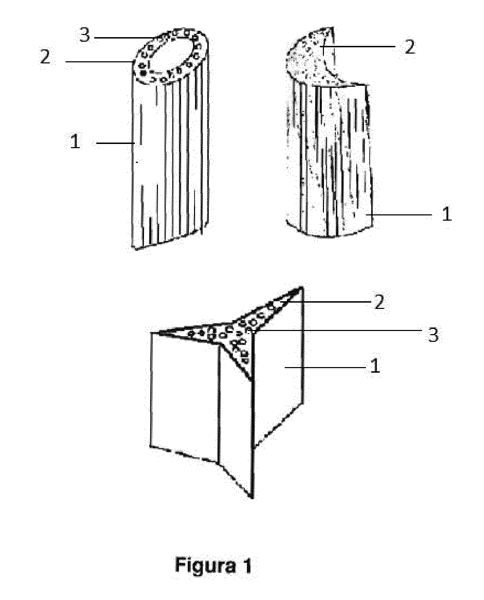

Figure 1; Front view of a root section of a dry macrophyte ready for use, showing different shapes depending on the plant used (star, crescent or circular).

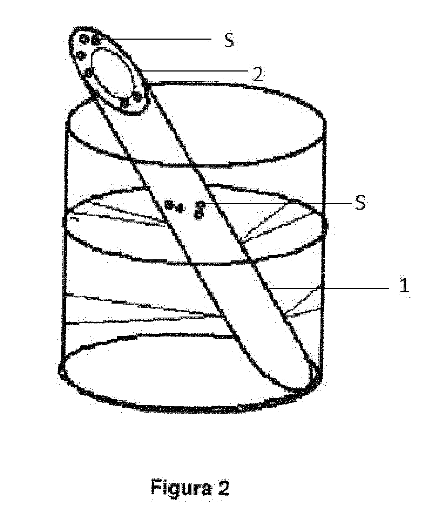

Figure 2; View of a section of a root of a macrophyte with the seed attached thereto and submerged in a container with water.

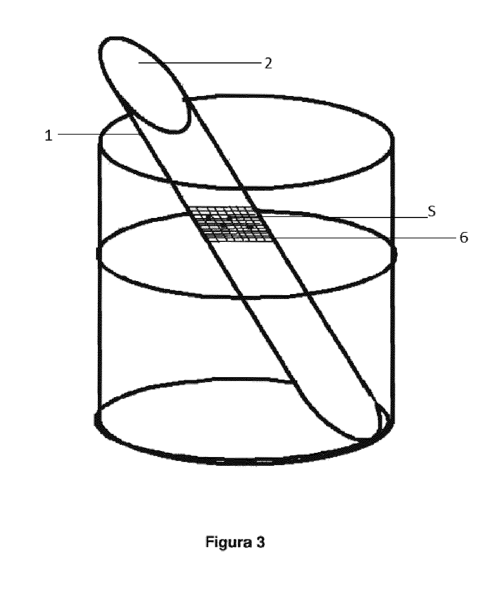

Figure 3; View of the support of plant origin in the container with water and with the attached netting to secure the seeds.

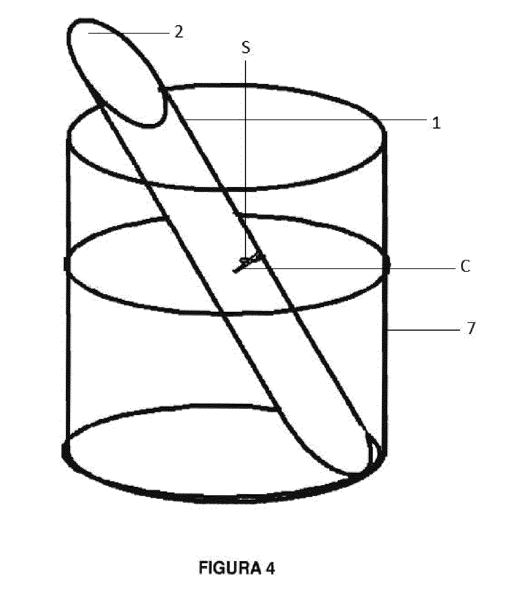

Figure 4; View of the support of plant origin or similar applied to a macrophyte plant seed to which a cut or incision has been made where the seeds are inserted.

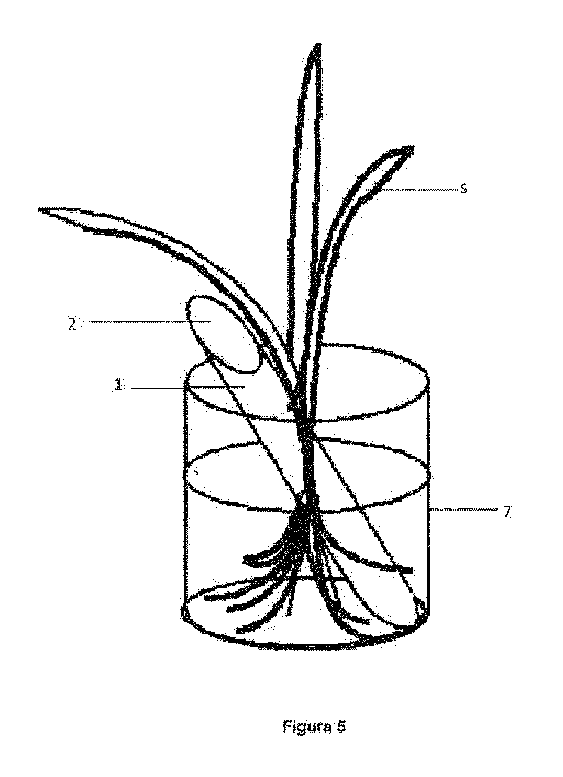

Figure 5; View of the support of plant origin or similar with the already developed plant.

### Description of the Invention

The synthesis of this invention is summarized in general terms as follows: the use of plant structures of the Macrophyte plant both the aerial and buried part (roots and rhizomes) due to their special structural and physiological characteristics as a suitable surface for growing and developing macrophyte plants and any other plant that it may be necessary to grow, as oxygen is taken from the air and transferred into the anoxic zones that are in contact with the plant.

The invention involves providing these plant structures (macrophytes) at their roots, stems and leaves with the capacity for injecting oxygen as an element contributing to support germination, growth and development of these or other plants, using, in addition, an element to secure the seeds to the macrophyte leaves.

In the process of germination and plant development and as a supplement to the support of plant origin and in order to secure the seeds (S) thereto, inert or food adhesives can be used as well as a fine mesh loose netting (6) which secures the seed around the surface of the macrophyte leaf.

The purpose of this procedure is to assist germination and plant development from seeds, regardless of their size, although it should be pointed out that the size of the seed of the macrophyte plant of the typha, scirpus and sparganium genus is minimal, around a few tenths of a millimetre or centimetre, depending on the variety of macrophyte.

The procedure described herein begins with the use of a section of cut and dried leaf, stem or root of a macrophyte as a support of plant origin. This support is formed by a double body comprising an outer layer by way of a leaf of greater flexibility and deformability (1) and a central body on the inside (2) in a more or less circular shape with a hard woody texture, that looks like a stem or root, whose internal structure is, in turn, traversed by a series of tubular bodies or supports (3) with a polygonal section that create an alveolar-type membrane (5) being completely permeable to the oxygen molecule (02), and all due to the isostatic pressure difference that gives way to this oxygen molecule from areas where it has a higher concentration to areas where there is a lower concentration. Through this process of osmotic exchange, the support of plant origin provides the seed or plant with the most suitable conditions for growth and development. Thus, when the plant is submerged in water it is provided with the oxygen necessary for the seed or plant to be surrounded by an aerobic environment and when the seed germinates the support provides the basic nutrients required.

This special characteristic consists of the structure of the plant tissue of the macrophyte plant, which does not lose its ability to inject oxygen although the leaf is dry and acts like a chimney that takes the oxygen from the part of the support exposed to contact with the air and it is transferred to the bottom of the plant which is submerged in water through the channels or tubes.

A number of seeds are inserted or added to this support of plant origin for germination and growth being necessary to use means that ensure proximity and permanence of the seed next to the plant support.

Several mediums can be used to secure the above, including materials such as an inert adhesive, gum base for chewing gum, liquid fertilizers (5), mesh netting (6) or by making a cut (C) in the support to insert the seed.
Resins, gum or liquid fertilizers impregnate the support of flexible plant origin, the seeds being fixed thereto by using these securing elements.

It is important to point out that the seeds or plants can be inserted or placed into any part of the support, both the submerged part as well as the part this remains out of the water, so the seeds shown in the drawings are by way of example and not as a limitation.

Finally, the support or segment of leaf with the seeds placed inside or in proximity will be placed in a container (7) which may be kept in anoxic conditions such as water environments that have low oxygenation on occasions, as is the case of wastewater or they can also be housed in muddy substrates or combinations of water and earth or fertilizers.

Thus, the seeds remain attached to the substrate, receiving sufficient oxygen supply to survive in an oxic environment and receiving sufficient nutrients and water and the plant can develop fully. As this support of plant origin is dry it has a life span and use limited to the life cycle of the seed it assists in the subsequent germination and development for a minimum of one year.

Being immersed in the water it withstands being exposed to harsh weather conditions, contact with water, fertilizer or similar substances without suffering damage or putrefaction.

Later, once the period of use has been completed, the support of plant origin decomposes and becomes plant nutrient which it helped to germinate so it is not necessary to remove it.

Therefore, and for the development of the seed or plant, we have developed a procedure that by means of using the support of plant origin manages to inject oxygen from the air to the macrophyte structure, thus the macrophyte leaf segment acts as a membrane that directly injects the 02 from the air to the submerged part based on the isostatic pressure of oxygen between the air and water in which the plant is submerged.

## Claims

1. A procedure to assist in seed germination and plant growth from a support of plant origin (segment of macrophyte leaf) wherein a support of plant origin is used to assist in seed germination and plant growth consisting of a piece, stem or dry root section of the plant itself and comprising a flexible outer layer and a central body with a woody texture, running internally through tubular bodies or supports with a polygonal section that create an alveolar-type membrane that is permeable to the oxygen molecule. Several seeds of the plant to be germinated are attached to this support of plant origin by various means.

2. A procedure to assist in seed germination and plant growth from a support of plant origin (segment of macrophyte leaf) in accordance with claim one wherein the seeds from plants to be germinated are secured to the support of plant origin by means of inert adhesives (resins, rubber or liquid fertilizers).

3. A procedure to assist in seed germination and plant growth from a support of plant origin (segment of macrophyte leaf) in accordance with claim one wherein the seeds of plants to be germinated are secured to the support of plant origin by means of netting.

4. A procedure to assist in seed germination and plant growth from a support of plant origin (segment of macrophyte plant) in accordance with claim one wherein the seeds of plants to be germinated are secured to the support of plant origin via openings or cuts made in the stem of the plant.

5. A procedure to assist in seed germination and plant growth from a support of plant origin (segment of macrophyte leaf) in accordance with the previous claims wherein the support of plant origin and the seeds housed therein are submerged in aqueous mediums.

6. A procedure to assist in seed germination and plant growth from a support of a plant origin (segment of macrophyte leaf) in accordance with the previous claims wherein the support of plant origin and the seeds housed therein are located in muddy substrates or combinations of water and earth or fertilizers.
